(19) Europäisches Patentamt

European Patent Office

Office européen des brevets

(11) **EP 4 266 308 B1**

(12) **EUROPEAN PATENT SPECIFICATION**

(45) Date of publication and mention
of the grant of the patent:
**08.07.2026 Bulletin 2026/28**

(21) Application number: **21909127.9**

(22) Date of filing: **06.12.2021**

(51) International Patent Classification (IPC):
*G10L 25/03* (2013.01)        *G10L 21/0208* (2013.01)
*G10L 25/30* (2013.01)        *G10L 25/78* (2013.01)

(52) Cooperative Patent Classification (CPC):
**G10L 21/0208; G10L 25/30;** G10L 25/78;
G10L 2021/02166

(86) International application number:
**PCT/CN2021/135832**

(87) International publication number:
**WO 2022/135130 (30.06.2022 Gazette 2022/26)**

(54) **VOICE EXTRACTION METHOD AND APPARATUS, AND ELECTRONIC DEVICE**

SPRACHEXTRAKTIONSVERFAHREN UND -VORRICHTUNG SOWIE ELEKTRONISCHE
VORRICHTUNG

PROCÉDÉ ET APPAREIL D'EXTRACTION DE VOIX ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2020 CN 202011555987**

(43) Date of publication of application:
**25.10.2023 Bulletin 2023/43**

(73) Proprietor: **BEIJING YOUZHUJU NETWORK
TECHNOLOGY CO. LTD.
Beijing 101299 (CN)**

(72) Inventor: **XU, Yangfei
Beijing 100190 (CN)**

(74) Representative: **Marks & Clerk LLP
15 Fetter Lane
London EC4A 1BW (GB)**

(56) References cited:
CN-A- 110 261 816        CN-A- 110 706 719
CN-A- 110 751 946        CN-A- 111 696 570
CN-A- 111 866 665        CN-A- 112 017 681
CN-A- 112 116 920        CN-A- 112 786 069
US-A1- 2004 220 800        US-A1- 2019 104 357
US-A1- 2019 172 476        US-A1- 2020 184 985

## Description

### CROSS REFERENCE OF RELATED APPLICATION

The present application claims the priority to Chinese Patent Application No. 202011555987.5, titled "VOICE EXTRACTION METHOD AND APPARATUS, AND ELECTRONIC DEVICE", filed on December 24, 2020 with the Chinese Patent Office.

### FIELD

The present disclosure relates to the field of computer technology, and in particular to a method and an apparatus for extracting a speech, and an electronic device.

### BACKGROUND

With the wide application of intelligent hardware, speech control is increasingly applied in the intelligent hardware (such as a speaker, television, and an in-vehicle device) to provide a natural interaction. A microphone array is widely adopted as a basic hardware facility in a sound acquisition module of the intelligent hardware. The microphone array is a system which includes a certain quantity of acoustic sensors (usually are microphones) and is configured to perform sampling and processing on spatial characteristics of a sound field. Microphones are arranged based on a designated requirement, and an algorithm is applied, so as to solve room acoustic problems, such as sound source localization, de-reverberation, speech enhancement, blind source separation. Patent publication CN 112017681 A1 describes a directional voice enhancement method and system.

### SUMMARY

Aspects of the invention are set out in the accompanying claims. This section of the present disclosure is provided to introduce concepts in brief. The concepts are described in detail in the following embodiments. This section of the present disclosure is not intended to identify key features or essential features of the claimed technical solutions, and is not intended to limit a protection scope of the claimed technical solutions.

In a first aspect, a method for extracting a speech is provided according to an embodiment of the present disclosure. The method includes: obtaining microphone array data; performing signal processing on the microphone array data to obtain a normalized feature, where the normalized feature is for characterizing a probability of presence of a speech in a predetermined direction; determining, based on the microphone array data, a speech feature of a speech in a target direction; and fusing the normalized feature with the speech feature of the speech in the target direction, and extracting speech data in the target direction based on the fused speech feature.

In a second aspect, an apparatus for extracting a speech is provided according to an embodiment of the present disclosure. The apparatus includes: an obtaining unit, configured to obtain microphone array data; a processing unit, configured to perform signal processing on the microphone array data to obtain a normalized feature, where the normalized feature is for characterizing a probability of presence of a speech in a predetermined direction; a determination unit, configured to determine, based on the microphone array data, a speech feature of a speech in a target direction; and an extraction unit, configured to fuse the normalized feature with the speech feature of the speech in the target direction, and extract speech data in the target direction based on the fused speech feature.

In a third aspect, an electronic device is provided according to an embodiment of the present disclosure. The electronic device includes one or more processors and a storage device. The storage device stores one or more programs. The one or more programs, when executed by the one or more processors, cause the one or more processors to implement the method for extracting a speech as in the first aspect.

In a fourth aspect, a computer-readable medium is provided according to an embodiment of the present disclosure. The computer-readable medium stores a computer program. The computer program, when executed by a processor, implements the method for extracting a speech as in the first aspect.

### BRIEF DESCRIPTION OF THE DRAWINGS

The above and other features, advantages and aspects of the embodiments of the present disclosure will be more apparent in conjunction with the accompanying drawings and with reference to the following embodiments. Throughout the drawings, the same or similar reference numerals represent the same or similar elements. It should be understood that the drawings are schematic and the originals and elements are unnecessarily drawn to scale.

Figure 1 shows a diagram of an exemplary system architecture to which embodiments of the present disclosure may be applied;

Figure 2 is a flowchart of a method for extracting a speech according to an embodiment of the present disclosure;

Figure 3 is a schematic diagram of an application scenario of a method for extracting a speech according to an embodiment of the present disclosure;

Figure 4 is a flowchart of a method for extracting a speech according to another embodiment of the present disclosure;

Figure 5 is a schematic structural diagram of an apparatus for extracting a speech according to an embodiment of the present disclosure; and

Figure 6 is a schematic structural diagram of a computer system suitable for implementing an electronic device according to an embodiment of the present disclosure.

## DETAILED DESCRIPTION OF THE EMBODIMENTS

The embodiments of the present disclosure are described in detail below with reference to the accompanying drawings. Although the drawings show some embodiments of the present disclosure, it should be understood that the present disclosure can be implemented in various forms and is not limited to the embodiments set forth herein. The embodiments are provided for a more thorough and complete understanding of the present disclosure. It should be understood that the drawings and the embodiments in the present disclosure are only illustrative of the disclosure, and are not intended to limit a protection scope of the present disclosure.

It should be understood that the steps of the method according to the embodiments of the present disclosure may be performed in different orders, and/or be performed in parallel. In addition, the method embodiments may include additional steps and/or omit execution of the illustrated steps, and the scope of the present disclosure is not limited thereto.

The term "including" and variants thereof used herein are inclusive, that is, meaning "including but not limited to". The term "based on" means "based at least in part on." The term "one embodiment" means "at least one embodiment". The term "another embodiment" means "at least one additional embodiment". The term "some embodiments" means "at least some embodiments". Definitions of other terms are provided in the following description.

It should be noted that concepts such as "first" and "second" are used herein merely for distinguishing different apparatuses, modules or units from each other, and are not intended to define an order or interdependence of functions performed by these apparatuses, modules or units.

It should be noted that the modifiers such as "one" and "multiple" herein are illustrative rather than restrictive. Those skilled in the art should understand that, unless otherwise explicitly pointed out in the context, these terms should be understood as "one or more".

The names of messages or information exchanged between multiple devices in the embodiments of the present disclosure are only illustrative, and are not intended to limit the scope of the messages or information.

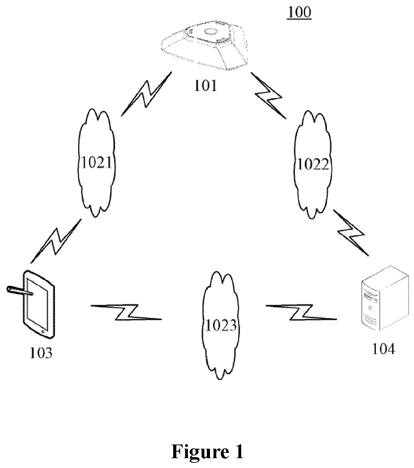

Figure 1 shows an exemplary system architecture 100 to which a method for extracting a speech according to an embodiment of the present disclosure can be applied.

Reference is made to Figure 1. A system architecture 100 may include a microphone array device 101, networks 1021, 1022, and 1023, a terminal device 103, and a server 104. The network 1021 serves as a medium for providing a communication link between the microphone array device 101 and the terminal device 103. The network 1022 serves as a medium for providing a communication link between the microphone array device 101 and the server 104. The network 1023 serves as a medium for providing a communication link between the terminal device 103 and the server 104. The network 1021, 1022, and 1023 may include various connection types, such as a wired communication link, a wireless communication link, or a fiber optic cable.

The microphone array device 101 is a system which includes a certain quantity of acoustic sensors (which usually are microphones) and is configured to perform sampling and processing on a spatial characteristic of a sound field. The microphone array device 101 may include, but is not limited to, a smart speaker, a network appliance, and other smart home device that require voice interaction.

The Terminal device 103 may interact with the microphone array device 101 through the network 1021, to send or receive a message, and the like. For example, the terminal device 103 may obtain microphone array data from the microphone array device 101. Terminal device 103 may interact with the server 104 through the network 1023, to send or receive a message, and the like. For example, the terminal device 103 may obtain, from the server 104, near-field speech data for training; and the server 104 may obtain, from the terminal device 103, near-field speech data for training. The terminal device 103 may be installed with various communication client applications, such as a speech processing application, instant messaging software, and smart home control software.

The terminal device 103 may obtain microphone array data from the microphone array device 101. Signal processing may be performed on the microphone array data to obtain a normalized feature. A speech feature of a speech in a target direction may be determined based on the microphone array data. The normalized feature may be fused with the speech feature of the speech in the target direction, and speech data in the target direction may be extracted based on the fused speech feature.

The terminal device 103 may be hardware or software. The terminal device 103, in a form of hardware, may be an electronic device supporting information exchange, including but not limited to a smartphone, a tablet, a laptop, and the like. The terminal device 103, in a form of software, may be installed in any of the above-listed electronic devices. The terminal device 103 may be implemented as multiple software or software modules (such as software or software modules for providing a distributed service), or may be implemented as a single software or software module, which is not specifically limited here.

The server 104 may be configured to provide various services. The server may be configured to: obtain microphone array data directly from the microphone array device 101, or obtain near-field speech data for training from the terminal device 103 to generate the microphone array data, for example; perform signal processing on the microphone array data to obtain a normalized feature; determine, based on the microphone array data, a speech feature of a speech in a target direction; and fuse the normalized feature with the speech feature of the speech in the target direction, and extract speech data in the target direction based on the fused speech feature.

It should be noted that the server 104 may be hardware or software. The server 104, in a form of hardware, may be implemented as a distributed server cluster including multiple servers, or may be implemented as a single server. The server 104, in a form of software, may be implemented as multiple software or software modules (for example, for providing distributed services), or may be implemented as a single software or software module, which is not specifically limited here.

It should be noted that the method for extracting a speech provided in the embodiments of the present disclosure may be executed by the server 104, and the apparatus for extracting a speech may be disposed in the server 104. The method for extracting a speech provided in the embodiments of the present disclosure may be executed by the terminal device 103, and the apparatus for extracting a speech may be disposed in the terminal device 103.

It should be noted that in a case where the method provided in the embodiments of the present disclosure is executed by the server 104: the exemplary system architecture 100 may not include the network 1021, the network 1023, and the terminal device 103, in a case that the server 104 obtains the microphone array data from the microphone array device 101; the exemplary system architecture 100 may not include the network 1021, the network 1022, and the microphone array devices 101, in a case that the server 104 obtains the near-field speech data for training from the terminal device 103; and the exemplary system architecture 100 may not include the network 1021, the network 1022, the network 1023, the microphone array device 101, and the terminal device 103, in a case that the server 104 locally stores the near-field speech data for training.

It should be noted that in a case that the method provided in the embodiments of the present disclosure is executed by the terminal device 103: the exemplary system architecture 100 may not include the network 1022, the network 1023, and the server 104, in a case that the terminal device 103 obtains the microphone array data from the microphone array device 101; the exemplary system architecture 100 may not include the network 1021, the network 1022, and the microphone array device 101, in a case that the terminal device 103 obtains the near-field speech data for training from the server 104; and the exemplary system architecture 100 may not include the network 1021, the network 1022, the network 1023, the microphone array device 101, and the server 104, in a case that the terminal device 103 locally stores the near-field speech data for training.

It should be understood that quantities of the microphone array device, the network, the terminal device, and the server as shown in Figure 1 is only illustrative. The microphone array device, the network, the terminal device, and the server may be in any quantities based on a demand for implementation.

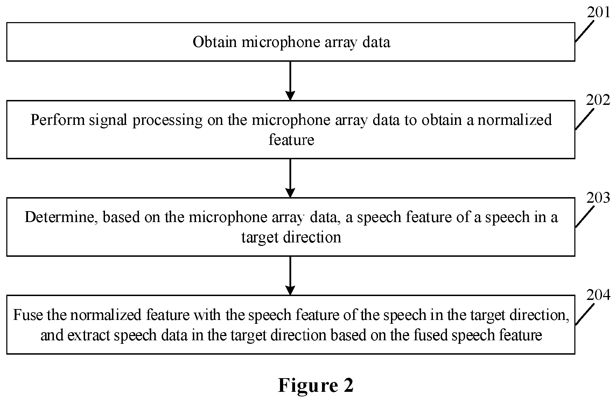

Reference is made to Figure 2, which shows a flowchart of a method for extracting a speech according to an embodiment of the present disclosure. The method as shown in Figure 2 includes the following steps 201 to 204.

In step 201, microphone array data is obtained.

In an embodiment, a subject executing the method (such as the terminal device 103 or the server 104 as shown in Figure 1) may obtain the microphone array data. Here, the subject may obtain the microphone array data from the microphone array device. As an example, the subject may obtain the microphone array data from a smart speaker.

In step 202, signal processing is performed on the microphone array data to obtain a normalized feature.

In an embodiment, the subject may perform the signal processing on the microphone array data obtained in step 201 to obtain the normalized feature. Here, the normalized feature may characterize a probability of presence of a speech in a predetermined direction. The normalized feature may be referred to as auxiliary information. Generally, the normalized feature may be characterized as a value in a range from 0 to 1. For example, a direction A corresponding to a normalized feature of 0 indicates that there is no speech signal in the direction A. For example, a direction B corresponding to a normalized feature of 1 indicates that there is a speech signal in the direction B. The predetermined direction may include a direction in which a speech may present, that is, the direction where a sound source is located, or may include a predetermined direction. The predetermined direction may be in a preset first quantity, for example, 10.

Here, a method for the signal processing performed by the subject on the microphone array data may include, but is not limited to, a fixed beamforming technology and a speech blind separation technology. The fixed beamforming usually refers to that a filter weight is fixed during a process of beamforming. The blind speech separation technology may be referred to as a blind signal separation algorithm. The blind speech separation technology may include the following two methods. In a first method, signal separation is performed by using a high-order statistical characteristic of a signal, that is, an independent component analysis (ICA) and various improved algorithms developed from the independent component analysis, such as a Fast ICA, an independent vector analysis (IVA), and the like. In a second method, signal separation is performed by using sparsity of a signal, which typical includes sparse component analysis (SCA), non-negative matrix factorization (NMF), and dictionary learning. The independent component analysis algorithm requires that signals are independent from each other, and a quantity of observations is greater than or equal to a quantity of sources. The sparsity-based algorithm does not have such limitation and may be solve the separation problem in a case where the quantity of observations is less than the quantity of sources.

In step 203, a speech feature of a speech in the target direction is determined based on the microphone array data.

In an embodiment, the subject may determine the speech feature of the speech in the target direction based on the microphone array data. The target direction is usually in a preset second quantity, for example, 4. The target direction may be a predetermined direction or a direction in which the sound source is located, re-determined based on the predetermined direction.

In step 204, the normalized feature is fused with the speech feature of the speech in the target direction, and speech data in the target direction is extracted based on the fused speech feature.

In an embodiment, the subject may fuse the normalized feature obtained in step 202 with the speech feature of the speech in the target direction determined in step 203. The subject may extract the speech data in the target direction based on the fused speech feature. Hence, extraction of the speech data is realized.

As an example, the subject may calculate a product of the normalized feature and the speech feature of the speech in each target direction, and determine the product as the fused speech feature.

As another example, the subject may calculate a sum of the normalized features and the speech feature of the speech in each target direction, and determine the sum as the fused speech feature.

In the method provided in the embodiment of the present disclosure, the speech data in the target direction is extracted based on a combination of an auxiliary feature (the normalized feature) with the speech feature of the speech in the target direction extracted from the original microphone array data. Thereby, an environmental noise can be reduced, and an accuracy of the extracted speech data is improved.

In an alternative implementation, the subject may determine the speech feature of the speech in the target direction based on the microphone array data in the following method. The subject may determine the speech feature of the speech in the target direction based on the microphone array data and a pre-trained model for speech feature extraction. As an example, the subject may input the microphone array data into the pre-trained model for speech feature extraction to obtain the speech feature of the speech in the target direction. The model for speech feature extraction may characterize a correspondence between the microphone array and the speech feature of the speech in the target direction.

In an alternative implementation, the model for speech feature extraction may include a complex convolutional neural network based on spatial variation. The complex convolutional neural network based on spatial variation may be applied to map the microphone array data to a high-dimensional space through the following equation (1):

$$Y^p[t,f] = \sum_{c=0}^{C-1} \sum_{k=-K}^{K} X_c[t, f+k] \cdot H_c^p[f, k+K] \qquad (1)$$

In equation (1), p represents a serial number of a direction; t represents a time; f represents a frequency; c represents a serial number of a microphone, and ranges from 0 to C-1; k represents a spectral index, and ranges from -K to K; $Y^p[t, f]$ represents a speech feature of a speech in the p-th direction at time t and frequency f; $X_c[t, f+k]$ represents a spectrum (i.e., the microphone array data) in the c-th microphone at time t and frequency f+k; and $H_c^p[f, k+K]$ represents a filter coefficient for mapping the microphone array data at the c-th microphone to the p-th direction at frequency f, where the filter coefficient covers a frequency range from f-K to f+K.

In the process of extracting the speech feature through the complex convolutional neural network based on spatial variation, correlation between frequencies is considered while mapping original microphone data to different directions p (the high-dimensional space). Convolution of a frequency scale is increased, so that a consistency problem in mapping the microphone data to different frequencies in p directions can be improved, and difficulty of subsequent network learning is reduced. In addition, a conventional process of extracting a speech features considers only a spatial feature of a single frequency point; while this method considers the spectral distribution in the frequency range from f-K to f+K. Therefore, an accuracy of extracting a speech feature is improved.

In an alternative implementation, the subject may extract the speech data in the target direction based on the fused speech feature through the following method. The subject may input the fused speech feature into a pre-trained model for speech extraction to obtain speech data in the target direction. The model for speech extraction may characterize a correspondence between the speech feature and speech data in the target direction.

In an alternative implementation, the subject may perform the signal processing on the microphone array data to obtain the normalized feature through the following method. The subject may perform processing on the microphone array data through a target technology, and perform post-processing on data obtained from the processing to obtain the normalized feature. The target technology may include at least one of the following: a fixed beamforming technology and a speech blind separation technology. The post-processing corresponds to a pre-processing, and refers to a step performed after the pre-processing and before a final processing and improvement, or refers to a step performed after a certain stage of work. Here, the post-processing may include, but is not limited to, at least one of the following: multi-channel post filtering, adaptive filtering, and Wiener filtering.

The adaptive filtering can operate well in an unknown environment and track an ability of input statistics to change over time. Although there are different implementation structures for different applications, the structures all have a basic feature: an input vector X(n) and an expected response d(n) are used to calculate an estimation error e(n), that is, e(n) =d(n)-X(n); this error signal is utilized to construct a performance function (such as a mean square error MSE) of an adaptive algorithm; and the performance function is adaptively updated with continuous input of data, in order to minimize the performance function. During this process, a filtering parameter of a filter is continuously updated and adjusted, so as to ensure that the parameter is optimal under a criteria used for minimizing the performance function. Thereby, a filtering effect is achieved, and an adaptive process is implemented.

In the Wiener filtering, it is assumed that an input to a linear filter is a sum of a useful signal and a noise, both of which are generalized stationary processes and second-order statistical characteristics thereof are known. Based on a minimum mean square error criterion (that the mean square value of a difference between an output signal of a filter and a desired signal is to be minimum), an optimal parameter of the linear filter is obtained.

With the post-processing on the data obtained from the processing, computation of subsequent processing of the neural network can be reduced.

In an alternative implementation, the subject may perform processing on the microphone array data through a target technology and perform post-processing on data obtained from the processed data through the following method. The subject may process the microphone array data through the fixed beamforming technology and a cross-correlation based speech enhancement technology. In the cross-correlation based speech enhancement technology, multiple signals may be processed by using a coherence function, and then a speech enhancement may be performed on the obtained data.

Due to spatial directionality of the fixed beam and the cross-correlation based speech enhancement, directional information may be reflected in the speech data instead of simply extracting phase difference, cross correlation, and other information of a microphone array. Therefore, mismatch between auxiliary information (the normalized feature) and microphone data is avoided. In addition, the fixed beam and the cross-correlation based speech enhancement algorithm have strong robustness in terms of reverberation, noise, and interference, and have reduced computational complexity compared to conventional adaptive beam and speech blind separation algorithm. Therefore, it is ensured that the method can run in real time on a lower computing platform.

In an alternative implementation, the subject may fuse the normalized feature with the speech feature of the speech in the target direction, and extract the speech data in the target direction based on the fused speech feature, through the following method. The subject may concatenate the normalized feature with the speech feature of the speech in the target direction, and input the concatenated speech feature into the pre-trained model for speech extraction to obtain the speech data in the target direction. Generally, one target direction corresponds to one channel of a speech extraction model. In a case that a quantity of the target directions is N, then N target directions correspond to N channels of the speech extraction model. The process of concatenating the normalized feature with the speech feature of the speech in the target direction is to add an additional channel to the normalized feature, and splice the normalized feature and the speech feature of the speech in the target direction into N+1 input channels and input the channels into the speech extraction model to obtain speech data in the target direction. This approach provides a method for fusing features.

In an alternative implementation, the microphone array data may be generated through the following method. Near-field speech data is first obtained. The near-field speech data may be pre-stored for training. The near-field speech data may be converted into far-field speech data. As an example, the far-field speech data may be generated through convolutional pulse response by using the near-field speech data. Then, noise may be added to the generated far-field speech data to obtain the microphone array data. As the microphone array data is generated through simulation, different simulation data is generated for a same near-field speech data in different iteration processes, therefore, data diversity is increased.

It should be noted that the microphone array data may be generated through the above generation method by the subject, or by an electronic device other than the subject. After the microphone array data is generated by an electronic device other than the subject, the subject may obtain the microphone array data from the electronic device that generates the microphone array data.

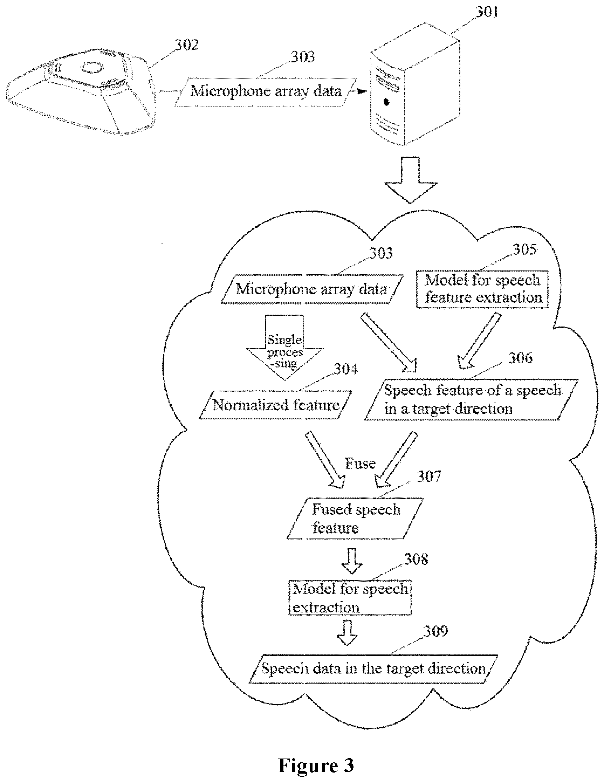

Reference is made to Figure 3, which is a schematic diagram of an application scenario of a method for extracting a speech according to an embodiment. In an application scenario as shown in Figure 3, a server 301 may first obtain microphone array data 303 from a microphone array device 302. Then, the server 301 may perform signal processing on the microphone array data 303 to obtain a normalized feature 304 for characterizing a probability of presence of a speech in a predetermined direction. Here, the server 301 may perform signal processing on the microphone array data 303 through the fixed beamforming technology or the blind speech separation technology. Then, the server 301 may determine a speech feature 306 of a speech in a target direction based on the microphone array data 303 and a pre-trained model 305 for speech feature extraction. Here, the server 301 may input the microphone array data 303 into the pre-trained model 305 for speech feature extraction to obtain the speech feature 306 in the target direction. The server 301 may fuse the normalized feature 304 with the speech feature 306 of the speech in the target direction, and input the fused speech feature 307 into a pre-trained model 308 for speech extraction to obtain speech data 309 in the target direction. Here, the server 301 may calculate a product of the normalized feature 304 and the speech feature 306 in each target direction, and determine the product as the fused speech feature 307.

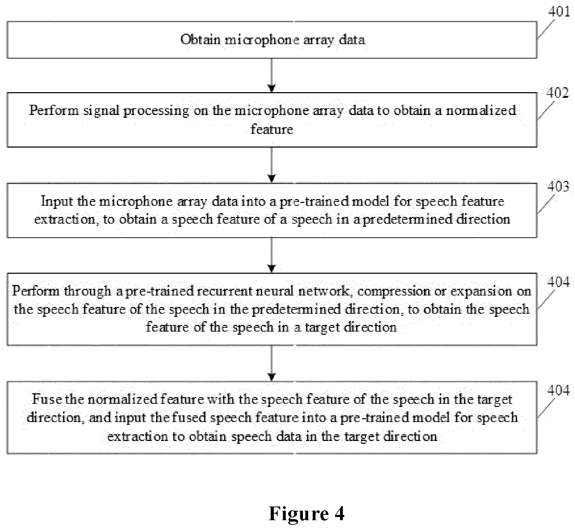

Reference is further made to Figure 4, which shows a process 400 of a method for extracting a speech according to another embodiment. The process 400 of the method includes the following steps 401 to 405.

In step 401, microphone array data is obtained.

In step 402, signal processing is performed on the microphone array data to obtain a normalized feature.

In an embodiment, steps 401 to 402 may be executed in a similar manner to steps 201 to 202, and are not described in detail here.

In step 403, the microphone array data is inputted to a pre-trained model for speech feature extraction, to obtain a speech feature of a speech in a predetermined direction.

In an embodiment, the subject may input the microphone array data into a pre-trained model for speech feature extraction to obtain the speech feature of the speech in the predetermined direction. The model for speech feature extraction may be used to characterize a correspondence between a microphone array and a speech feature of a speech in a predetermined direction. The predetermined direction may include a direction in which a speech may exist, that is, a direction where a sound source is located, or may include a pre-set direction. The predetermined direction may be in a preset first quantity, for example, 10.

In step 404, compression or expansion is performed, through a pre-trained recursive neural network, on the speech feature of the speech in the predetermined direction to obtain the speech feature of the speech in the target direction.

In this embodiment, the subject may perform the compression or expansion on the speech feature of the speech in the predetermined direction through the pre-trained recursive neural network (RNN), so as to obtain the speech feature of the speech in the target direction. The recursive neural network is an artificial neural network (ANN) having a tree hierarchical structure and including network nodes that conduct recursion on input information in a connection order of the network nodes.

In an example, the subject may input the speech feature of the speech in the predetermined direction into the recursive neural network to obtain the speech feature of the speech in the target direction. The target direction is usually in a preset second quantity, for example, 4.

In a case that the quantity of the target direction is less than the quantity of the predetermined direction, the compression is performed through the recursive neural network on the speech feature of the speech in the predetermined direction. For example, in a case that the quantity of the target direction is 4 and the quantity of the predetermined direction is 10, the speech feature of the speech in the 10 directions are integrated, through the recursive neural network, into a speech feature of the speech in the 4 directions.

In a case that the quantity of the target direction is greater than the quantity of the predetermined direction, the expansion is performed through the recursive neural network on the speech feature of the speech in the predetermined direction. For example, in a case that the quantity of the target direction is 4 and the quantity of the predetermined direction is 3, the speech feature of the speech in the 3 directions are integrated, through the recursive neural network, into a speech feature of the speech in the 4 directions.

It should be noted that the compression or expansion is performed on speech features of speeches at different frequencies usually through recursive neural networks with a same network parameter. With such approach, a consistency between speeches at different frequencies during the compression or expansion can be ensured.

In step 405, the normalized feature is fused with the speech feature of the speech in the target direction, and the fused speech feature is inputted into a pre-trained model for speech extraction to obtain speech data in the target direction.

In an embodiment, step 405 may be executed in a similarly to step 204, and is not described in further detail here.

As can be seen from Figure 4, the process 400 of the method for extracting a speech reflects the compression or expansion on the speech feature of the speech in the predetermined direction, compared to an embodiment as shown in Figure 2. The compression on the speech feature as described in this embodiment can reduce amount of parameters and computation of the network. In addition, application of the recursive neural network can effectively utilize a temporal correlation of speech signals in a time dimension, so that continuity of the speech in time is ensured.

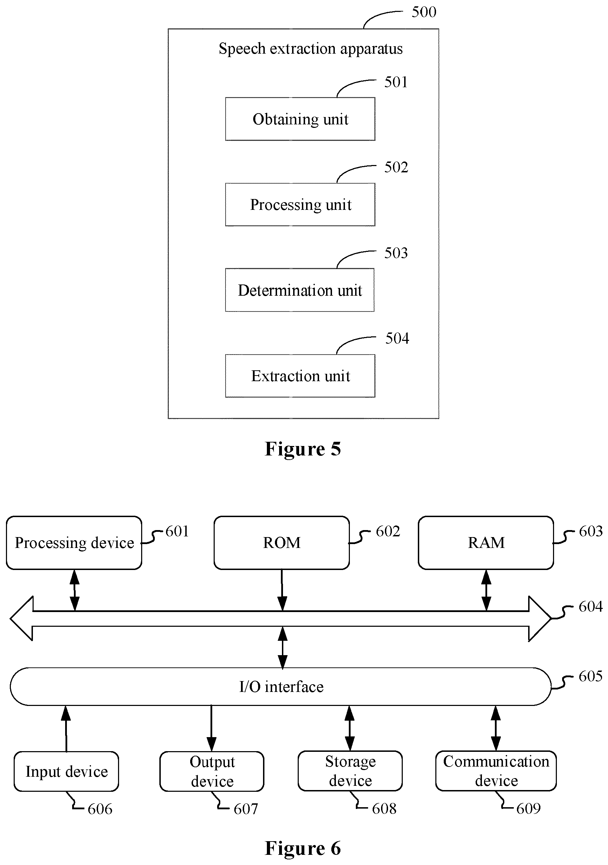

Reference is further made to Figure 5. An apparatus for extracting a speech is provided in an embodiment of the present disclosure, as an implementation of the method as shown in any of the above figures. The apparatus embodiment corresponds to the method embodiment shown in Figure 2. The apparatus may be applied to various electronic devices.

As shown in Figure 5, the apparatus for extracting a speech in this embodiment includes: an obtaining unit 501, a processing unit 502, a determination unit 503, and an input unit 504. The obtaining unit 501 is configured to obtain microphone array data. The processing unit 502 is configured to perform signal processing on the microphone array data to obtain a normalized feature, where the normalized feature is for characterizing a probability of presence of a speech in a predetermined direction. The determination unit 503 is configured to determine, based on the microphone array data, a speech feature of a speech in a target direction. The extraction unit 504 is configured to fuse the normalized feature with the speech feature of the speech in the target direction, and extract speech data in the target direction based on the fused speech feature.

In an embodiment, specific operations by the obtaining unit 501, the processing unit 502, the determination unit 503, and the extraction unit 504 of the apparatus, and technical effects thereof, may be referred to relevant explanations of the step 201, step 202, step 203, and step 204 in corresponding embodiments as shown in Figure 2, and are not described in further detail here.

In an alternative implementation, the determination unit 503 is further configured to determine the speech feature of the speech in the target direction based on the microphone array data by: determining the speech feature of the speech in the target direction based on the microphone array data and a pre-trained model for speech feature extraction.

In an alternative implementation, the determination unit 503 is further configured to determine the speech feature of the speech in the target direction based on the microphone array data and the pre-trained model for speech feature extraction by: inputting the microphone array data into the pre-trained model for speech feature extraction, to obtain the speech feature of the speech in a predetermined direction; and performing, through a pre-trained recursive neural network, compression or expansion on the speech feature of the speech in the predetermined direction to obtain the speech feature of the speech in the target direction.

In an alternative implementation, the model for speech feature extraction includes a complex convolutional neural network based on spatial variation.

In an alternative implementation, the extraction unit 504 is further configured to extract the speech data in the target direction based on the fused speech feature by: inputting the fused speech feature into a pre-trained model for speech extraction to obtain the speech data in the target direction.

In an alternative implementation, the processing unit 502 is further configured to perform the signal processing on the microphone array data to obtain the normalized feature by: performing processing on the microphone array data through a target technology, and performing post-processing on data obtained from the processing to obtain the normalized feature. The target technology includes at least one of the following: a fixed beamforming technology and a speech blind separation technology.

In an alternative implementation, the processing unit 502 is further configured to perform the processing on the microphone array data through a target technology, and performing the post-processing on data obtained from the processing by: processing the microphone array data through the fixed beamforming technology and a cross-correlation based speech enhancement technology.

In an alternative implementation, the extraction unit 504 is further configured to fuse the normalized feature with the speech feature of the speech in the target direction, and extract the speech data in the target direction based on the fused speech feature by: concatenating the normalized feature and the speech feature of the speech in the target direction, and inputting the concatenated speech feature into the pre-trained model for speech extraction, to obtain the speech data in the target direction.

In an alternative implementation, the microphone array data is generated by: obtaining near-field speech data, and converting the near-field speech data into far-field speech data; and adding a noise to the far-field speech data to obtain the microphone array data.

Hereinafter, reference is made to Figure 6, which shows a schematic structural diagram of an electronic device (such as the terminal device or server as shown in Figure 1) suitable for implementing the embodiments of the present disclosure. The terminal device in an embodiment of the present disclosure may include, but is not limited to, a mobile terminal, such as a mobile phone, a notebook computer, a digital broadcast receiver, a PDA (Personal Digital Assistant), a PAD (Tablet computer), a PMP (Portable Multimedia Player), and an in-vehicle terminal (such as an in-vehicle navigation terminal), and a fixed terminal such as a digital TV, a desktop computer. The electronic device as shown in Figure 6 is only exemplary, and should not indicate any limitation to a function and application scope of the embodiments of the present disclosure.

As shown in Figure 6, the electronic device may include a processing device 601 (such as a central processor and a graphics processor) which may execute various operations and processing based on a program stored in a Read Only Memory (ROM) 602 or a program loaded from the storage device 608 into a Random Access Memory (RAM) 603. The RAM 603 further stores data and programs required by the electronic device. The processing device 601, the ROM 602 and the RAM 603 are connected to each other via a bus 604. An Input/output (I/O) interface 605 is also connected to the bus 604.

Generally, the I/O interface 605 may be connected to: an input device 606, such as a touch screen, a touch panel, a keyboard, a mouse, a camera, a microphone, an accelerometer, and a gyroscope; an output device 607, such as a liquid crystal display (LCD), a speaker, and a vibrator; a storage device 608 such as a magnetic tape and a hard disk; and a communication device 609. The communication device 609 enables the electronic device to perform wireless or wired communication with other devices for data exchanging. Although Figure 6 shows an electronic device having various components, it should be understood that the illustrated components are not necessarily required to be all implemented or included. Alternatively, more or fewer components may be implemented or included.

Particularly, according to some embodiments of the present disclosure, the process described above in conjunction with flowcharts may be implemented as a computer software program. For example, a computer program product is further provided in an embodiment in the present disclosure, including a computer program carried on a non-transitory computer-readable storage medium. The computer program includes program codes for performing the method shown in the flowcharts. In such embodiment, the computer program may be downloaded and installed from the network via the communication device 609, or installed from the storage device 608, or installed from the ROM 602. When the computer program is executed by the processing device 601, the above-mentioned functions defined in the method according to the embodiments of the present disclosure are performed.

It should be noted that, the computer-readable medium herein may be a computer-readable signal medium, or a computer-readable storage medium, or any combination thereof. The computer-readable storage medium may be, but is not limited to, a system, apparatus, or device in an electronic, magnetic, optical, electromagnetic, infrared, or semi-conductive form, or any combination thereof. The computer-readable storage medium may be, but is not limited to, an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), a light storage device, a magnetic storage device, or any combination thereof. In some embodiments of the present disclosure, the computer-readable storage medium may be any tangible medium containing or storing a program. The program may be used by or in combination with an instruction execution system, apparatus, or device. In some embodiments of the present disclosure, the computer-readable signal medium may be a data signal transmitted in a baseband or transmitted as a part of a carrier wave, and carry computer-readable program codes. The transmitted data signal may be in various forms, including but not limited to an electromagnetic signal, an optical signal, or any proper combination thereof. The computer-readable signal medium may be any computer-readable medium other than the computer-readable storage medium. The computer-readable signal medium can send, propagate or transmit a program to be used by or with an instruction execution system, apparatus or device. The program codes stored in the computer-readable medium may be transmitted via any proper medium, including but not limited to: wired, optical fiber cable, radio frequency (RF), or any suitable combination thereof.

In some embodiments, the client and the server may perform communication by using any known or future developed network protocol such as HTTP (HyperText Transfer Protocol), and may be interconnected with any form or medium of digital data communication (for example, a communication network). Examples of communication networks include a local area network (LAN), a wide area network (WAN), an internet (e.g., the Internet), a peer-to-peer network (such as the ad hoc peer-to-peer network), and any current or future network.

The computer-readable medium may be incorporated in the electronic device, or may exist independently without being assembled into the electronic device.

The computer-readable storage medium carries one or more programs. The one or more programs, when executed by the electronic device, cause the electronic device to: obtain microphone array data; perform signal processing on the microphone array data to obtain a normalized feature, where the normalized feature is for characterizing a probability of presence of a speech in a predetermined direction; determine, based on the microphone array data, a speech feature of a speech in a target direction; and fuse the normalized feature with the speech feature of the speech in the target direction, and extract speech data in the target direction based on the fused speech feature.

Computer program code for performing operations of the present disclosure may be written in one or more programming languages, or a combination thereof. The programming languages include, but are not limited to, object oriented programming languages, such as Java, Smalltalk, and C++, and conventional procedural programming languages, such as the "C" language or similar programming languages. The program code may be executed entirely on a user computer, or partly on a user computer, or as a stand-alone software package, or partly on a user computer and partly on a remote computer, or entirely on a remote computer or server. In the case of involving a remote computer, the remote computer may be connected to a user computer through any kind of network, including a local area network (LAN) or a wide area network (WAN), or may be connected to an external computer (e.g., using Internet connection provided by an Internet service provider).

The flowcharts and block diagrams in the Figures illustrate the architecture, functionality, and operations of possible implementations of systems, methods and computer program products according to various embodiments of the present disclosure. In this regard, each block in the flowcharts or block diagrams may represent a module, program segment, or a portion of code that contains one or more executable instructions for implementing the specified logical functions. It should also be noted that, in some alternative implementations, the functions noted in the blocks may occur in an order other than the order shown in the figures. For example, two blocks shown in succession may be executed substantially concurrently, or the blocks may sometimes be executed in a reverse order, depending upon the functionality involved. It is also noted that each block of the block diagrams and/or flowchart illustrations, and combinations of blocks in the block diagrams and/or flowchart illustrations, may be implemented in dedicated hardware-based systems that perform specified functions or operations, or may be implemented by a combination of dedicated hardware and computer instructions.

The units mentioned in the description of the embodiments of the present disclosure may be implemented by means of software, or otherwise by means of hardware. The units may be disposed in a processor, for example, described as "a processor, including an obtaining unit, a processing unit, a determination unit, and an extraction unit". The names of the units do not constitute limitations on the units themselves. For example, the obtaining unit may be described as "a unit configured to obtain microphone array data".

The functions described above may be performed, at least in part, by one or more hardware logic components. For example, without limitation, available examples of the hardware logic components include: a Field Programmable Gate Array (FPGA), an Application Specific Integrated Circuit (ASIC), an Application Specific Standard Product (ASSP), a System on Chip (SOC), a Complex Programmable Logical Device (CPLD), and the like.

In the present disclosure, a machine-readable medium may be a tangible medium that may contain or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination thereof. More specific examples of the machine-readable storage medium include an electrical connection based on one or more wires, a portable computer disk, a hard disk, a random access memory (RAM), a read only memory (ROM), an erasable programmable read only memory (EPROM or flash memory), a fiber optic, a compact disk read only memory (CD-ROM), an optical storage device, a magnetic storage device, or any suitable combination thereof.

According to one or more embodiments of the present disclosure, a method for extracting a speech is provided. The method includes: obtaining microphone array data; performing signal processing on the microphone array data to obtain a normalized feature, where the normalized feature is for characterizing a probability of presence of a speech in a predetermined direction; determining, based on the microphone array data, a speech feature of a speech in a target direction; and fusing the normalized feature with the speech feature of the speech in the target direction, and extracting speech data in the target direction based on the fused speech feature.

According to one or more embodiments of the present disclosure, the determining, based on the microphone array data, a speech feature of a speech in a target direction includes: determining the speech feature of the speech in the target direction based on the microphone array data and a pre-trained model for speech feature extraction.

According to one or more embodiments of the present disclosure, the determining the speech feature of the speech in the target direction based on the microphone array data and a pre-trained model for speech feature extraction includes: inputting the microphone array data into the pre-trained model for speech feature extraction, to obtain the speech feature of the speech in a predetermined direction; and performing, through a pre-trained recursive neural network, compression or expansion on the speech feature of the speech in the predetermined direction to obtain the speech feature of the speech in the target direction.

According to one or more embodiments of the present disclosure, the model for speech feature extraction includes a complex convolutional neural network based on spatial variation

According to one or more embodiments of the present disclosure, the extracting speech data in the target direction based on the fused speech feature includes: inputting the fused speech feature into a pre-trained model for speech extraction to obtain the speech data in the target direction.

According to one or more embodiments of the present disclosure, the performing signal processing on the microphone array data to obtain a normalized feature includes: performing processing on the microphone array data through a target technology, and performing post-processing on data obtained from the processing to obtain the normalized feature, where the target technology includes at least one of the following: a fixed beamforming technology and a speech blind separation technology.

According to one or more embodiments of the present disclosure, the performing processing on the microphone array data through a target technology, and performing post-processing on data obtained from the processing, to obtain the normalized feature, includes: processing the microphone array data through the fixed beamforming technology and a cross-correlation based speech enhancement technology.

According to one or more embodiments of the present disclosure, the fusing the normalized feature with the speech feature of the speech in the target direction, and extracting speech data in the target direction based on the fused speech feature includes: concatenating the normalized feature and the speech feature of the speech in the target direction, and inputting the concatenated speech feature into the pre-trained model for speech extraction, to obtain the speech data in the target direction.

According to one or more embodiments of the present disclosure, the microphone array data is generated by: obtaining near-field speech data, and converting the near-field speech data into far-field speech data; and adding a noise to the far-field speech data to obtain the microphone array data.

According to one or more embodiments of the present disclosure, an apparatus for extracting a speech is provided. The apparatus includes: an obtaining unit, configured to obtain microphone array data; a processing unit, configured to perform signal processing on the microphone array data to obtain a normalized feature, where the normalized feature is for characterizing a probability of presence of a speech in a predetermined direction; a determination unit, configured to determine, based on the microphone array data, a speech feature of a speech in a target direction; and an extraction unit, configured to fuse the normalized feature with the speech feature of the speech in the target direction, and extract speech data in the target direction based on the fused speech feature.

According to one or more embodiments of the present disclosure, the determination unit is further configured to determine, based on the microphone array data, a speech feature of a speech in a target direction by: determining the speech feature of the speech in the target direction based on the microphone array data and a pre-trained model for speech feature extraction.

According to one or more embodiments of the present disclosure, the determination unit is further configured to determine the speech feature of the speech in the target direction based on the microphone array data and a pre-trained model for speech feature extraction by: inputting the microphone array data into the pre-trained model for speech feature extraction, to obtain the speech feature of the speech in a predetermined direction; and performing, through a pre-trained recursive neural network, compression or expansion on the speech feature of the speech in the predetermined direction to obtain the speech feature of the speech in the target direction.

According to one or more embodiments of the present disclosure, the model for speech feature extraction includes a complex convolutional neural network based on spatial variation.

According to one or more embodiments of the present disclosure, the extraction unit is further configured to extract speech data in the target direction based on the fused speech feature by: inputting the fused speech feature into a pre-trained model for speech extraction to obtain the speech data in the target direction.

According to one or more embodiments of the present disclosure, the processing unit is further configured to perform signal processing on the microphone array data to obtain a normalized feature by: performing processing on the microphone array data through a target technology, and performing post-processing on data obtained from the processing to obtain the normalized feature, where the target technology includes at least one of the following: a fixed beamforming technology and a speech blind separation technology.

According to one or more embodiments of the present disclosure, the processing unit is further configured to perform processing on the microphone array data through a target technology, and perform post-processing on data obtained from the processing, to obtain the normalized feature by: processing the microphone array data through the fixed beamforming technology and a cross-correlation based speech enhancement technology.

According to one or more embodiments of the present disclosure, the extraction unit is further configured to fuse the normalized feature with the speech feature of the speech in the target direction, and extract speech data in the target direction based on the fused speech feature by: concatenating the normalized feature and the speech feature of the speech in the target direction, and inputting the concatenated speech feature into the pre-trained model for speech extraction, to obtain the speech data in the target direction.

According to one or more embodiments of the present disclosure, the microphone array data is generated by: obtaining near-field speech data, and converting the near-field speech data into far-field speech data; and adding a noise to the far-field speech data to obtain the microphone array data.

According to one or more embodiments of the present disclosure, an electronic device is provided. The electronic device includes at least one processor, and a storage device storing at least one program. The at least one program, when executed by the at least one processor, causes the at least one processor to implement the method for extracting a speech.

According to one or more embodiments of the present disclosure, a computer-readable medium is provided, storing a computer program. The computer program, when executed by a processor, implements the method for extracting a speech.

The above description includes merely preferred embodiments of the present disclosure and explanations of technical principles used. Those skilled in the art should understand that the scope of the present disclosure is not limited to technical solutions formed by a specific combination of the above technical features, but covers other technical solutions formed by any combination of the above technical features or equivalent features thereof without departing from the concept of the present disclosure. For example, a technical solution formed by interchanging the above features with technical features having similar functions as disclosed (but not limited thereto) falls within the scope of the present disclosure.

In addition, although the operations are described in a specific order, it should not be understood that these operations are to be performed in the specific order shown or performed in a sequential order. Under certain circumstances, multitasking and parallel processing may be advantageous. Although the specific implementation details are described above, these implementation details should not be construed as limiting the scope of the present disclosure. The features described in multiple separate embodiments may be implemented in combination in one embodiment. Conversely, the features described in one embodiment may be implemented in multiple embodiments individually or in any suitable sub-combination.

Although the subject matter has been described in language specific to structural features and/or logical actions of the method, it should be understood that the subject matter defined in the appended claims are unnecessarily limited to the specific features or actions described above. The specific features and actions described above are merely exemplary forms of implementing the claims.

## Claims

1. A method for extracting a speech, comprising:

   obtaining microphone array data;
   performing signal processing on the microphone array data to obtain a normalized feature, wherein the normalized feature is for characterizing a probability of presence of a speech in a predetermined direction;
   determining, based on the microphone array data, a speech feature of a speech in a target direction; and
   fusing the normalized feature with the speech feature of the speech in the target direction, and extracting speech data in the target direction based on the fused speech feature;
   **characterized by**:

   wherein the determining, based on the microphone array data, a speech feature of a speech in a target direction comprises: determining the speech feature of the speech in the target direction based on the microphone array data and a pre-trained model for speech feature extraction;
   wherein the determining the speech feature of the speech in the target direction based on the microphone array data and a pre-trained model for speech feature extraction comprises: inputting the microphone array data into the pre-trained model for speech feature extraction, to obtain the speech feature of the speech in a predetermined direction; and performing, through a pre-trained recursive neural network, compression or expansion on the speech feature of the speech in the predetermined direction to obtain the speech feature of the speech in the target direction;
   wherein performing, through a pre-trained recursive neural network, compression or expansion on the speech feature of the speech in the predetermined direction to obtain the speech feature of the speech in the target direction, comprising:

   in a case that the quantity of the target direction is less than the quantity of the predetermined direction, compressing through the recursive neural network the speech feature of the speech in the predetermined directions to speech features in the target directions; in a case that the quantity of the target direction is greater than the quantity of the predetermined direction, expanding through the recursive neural network the speech feature of the speech in the predetermined directions to speech features in the target directions;
   wherein the target direction is the predetermined direction or a direction in which the sound source is located, re-determined based on the predetermined direction;
   wherein the recursive neural network is an artificial neural network having a tree hierarchical structure and including network nodes that conduct recursion on input information in a connection order of the network nodes.

2. The method according to claim 1, wherein the model for speech feature extraction comprises a complex convolutional neural network based on spatial variation;

wherein the complex convolutional neural network based on spatial variation is applied to map the microphone array data to a high-dimensional space through the following equation (1):

$$Y^p[t, f] = \sum_{c=0}^{C-1} \sum_{k=-K}^{K} X_c[t, f+k] \cdot H_c^p[f, k+K] \qquad (1)$$

wherein in equation (1):

p represents a serial number of a direction;
t represents a time; f represents a frequency;
c represents a serial number of a microphone, and ranges from 0 to C-1;
k represents a spectral index, and ranges from -K to K;
$Y^p[t, f]$ represents a speech feature of a speech in the p-th direction at time t and frequency f;
$X_c[t, f+k]$ represents a spectrum (i.e., the microphone array data) in the c-th microphone at time t and frequency f+k; and

$H_c^p[f, k+K]$ represents a filter coefficient for mapping the microphone array data at the c-th microphone to the p-th direction at frequency f, where the filter coefficient covers a frequency range from f-K to f+K.

3. The method according to claim 1, wherein the extracting speech data in the target direction based on the fused speech feature comprises:
inputting the fused speech feature into a pre-trained model for speech extraction to obtain the speech data in the target direction.

4. The method according to claim 1, wherein the performing signal processing on the microphone array data to obtain a normalized feature comprises:

performing processing on the microphone array data through a target technology, and
performing post-processing on data obtained from the processing, to obtain the normalized feature, wherein the target technology comprises at least one of the following: a fixed beamforming technology and a speech blind separation technology.

5. The method according to claim 4, wherein the performing processing on the microphone array data through a target technology, and performing post-processing on data obtained from the processing, comprises:
processing the microphone array data through the fixed beamforming technology and a cross-correlation based speech enhancement technology.

6. The method according to claim 3, wherein the fusing the normalized feature with the speech feature of the speech in the target direction, and extracting speech data in the target direction based on the fused speech feature comprises:

concatenating the normalized feature and the speech feature of the speech in the target direction, and
inputting the concatenated speech feature into the pre-trained model for speech extraction, to obtain the speech data in the target direction.

7. An apparatus for extracting a speech, comprising:

an obtaining unit, configured to obtain microphone array data;
a processing unit, configured to perform signal processing on the microphone array data to obtain a normalized feature, wherein the normalized feature is for characterizing a probability of presence of a speech in a predetermined direction;
a determination unit, configured to determine, based on the microphone array data, a speech feature of a speech in a target direction; and
an extraction unit, configured to fuse the normalized feature with the speech feature of the speech in the target direction, and extract speech data in the target direction based on the fused speech feature;
**characterized by**:

wherein the determining, based on the microphone array data, a speech feature of a speech in a target direction comprises: determining the speech feature of the speech in the target direction based on the microphone array data and a pre-trained model for speech feature extraction;

wherein the determining the speech feature of the speech in the target direction based on the microphone array data and a pre-trained model for speech feature extraction comprises: inputting the microphone array data into the pre-trained model for speech feature extraction, to obtain the speech feature of the speech in a predetermined direction; and performing, through a pre-trained recursive neural network, compression or expansion on the speech feature of the speech in the predetermined direction to obtain the speech feature of the speech in the target direction;

wherein performing, through a pre-trained recursive neural network, compression or expansion on the speech feature of the speech in the predetermined direction to obtain the speech feature of the speech in the target direction, comprising:

in a case that the quantity of the target direction is less than the quantity of the predetermined direction, compressing through the recursive neural network the speech feature of the speech in the predetermined directions to speech features in the target directions; in a case that the quantity of the target direction is greater than the quantity of the predetermined direction, expanding through the recursive neural network the speech feature of the speech in the predetermined directions to speech features in the target directions;

wherein the target direction is the predetermined direction or a direction in which the sound source is located, re-determined based on the predetermined direction;

wherein the recursive neural network is an artificial neural network having a tree hierarchical structure and including network nodes that conduct recursion on input information in a connection order of the network nodes.

8. An electronic device, comprising:

at least one processor;
a storage device storing at least one program, wherein
the at least one program, when executed by the at least one processor, causes the at least one processor to implement the method according to any one of claims 1 to 6.

9. A computer-readable medium, storing a computer program, wherein
the computer program, when executed by a processor, causes the processor to implement the method according to any one of claims 1 to 6.

**Patentansprüche**

1. Verfahren zum Extrahieren von Sprache, umfassend:

Erfassen von Mikrofonarraydaten;
Durchführen von Signalverarbeitung an den Mikrofonarraydaten, um ein normalisiertes Merkmal zu erhalten, wobei das normalisierte Merkmal zum Charakterisieren einer Wahrscheinlichkeit des Vorhandenseins von Sprache in einer vorbestimmten Richtung dient;
Bestimmen eines Sprachmerkmals von Sprache in eine Zielrichtung auf Grundlage der Mikrofonarraydaten; und
Verschmelzen des normalisierten Merkmals mit dem Sprachmerkmal der Sprache in der Zielrichtung und Extrahieren von Sprachdaten in der Zielrichtung auf Grundlage der verschmolzenen Sprachmerkmale;
**gekennzeichnet durch**:

wobei das Bestimmen eines Sprachmerkmals von Sprache in einer Zielrichtung auf Grundlage der Mikrofonarraydaten Folgendes umfasst: Bestimmen des Sprachmerkmals der Sprache in der Zielrichtung auf Grundlage der Mikrofonarraydaten und eines vortrainierten Modells zur Sprachmerkmalsextraktion;
wobei das Bestimmen des Sprachmerkmals der Sprache in der Zielrichtung auf Grundlage der Mikrofonarraydaten und eines vortrainierten Modells zur Sprachmerkmalsextraktion Folgendes umfasst: Eingeben der Mikrofonarraydaten in das vortrainierte Modell zur Sprachmerkmalsextraktion, um das Sprachmerkmal der Sprache in einer vorbestimmten Richtung zu erhalten; und Durchführen einer Kompression oder Expansion an dem Sprachmerkmal der Sprache in der vorbestimmten Richtung durch ein vortrainiertes rekursives neuronales Netz, um das Sprachmerkmal der Sprache in der Zielrichtung zu erhalten;

wobei das Durchführen einer Kompression oder Expansion an dem Sprachmerkmal der Sprache in der vorbestimmten Richtung durch ein vortrainiertes rekursives neuronales Netz, um das Sprachmerkmal der Sprache in der Zielrichtung zu erhalten, Folgendes umfasst:

falls die Quantität der Zielrichtung geringer ist als die Quantität der vorbestimmten Richtung, Komprimieren der Sprachmerkmale der Sprache in den vorbestimmten Richtungen durch das rekursive neuronale Netz auf Sprachmerkmale in den Zielrichtungen; falls die Quantität der Zielrichtung größer ist als die Quantität der vorbestimmten Richtung, Expandieren der Sprachmerkmale der Sprache in den vorbestimmten Richtungen durch das rekursive neuronale Netz auf Sprachmerkmale in den Zielrichtungen;

wobei die Zielrichtung die vorbestimmte Richtung oder eine Richtung ist, in der sich die Schallquelle befindet, die auf der Grundlage der vorbestimmten Richtung neu bestimmt wird;

wobei das rekursive neuronale Netz ein künstliches neuronales Netz ist, das eine hierarchische Baumstruktur aufweist und Netzknoten einschließt, die eine Rekursion auf Eingabeinformationen in einer Verbindungsreihenfolge der Netzknoten durchführen.

2. Verfahren nach Anspruch 1, wobei das Modell zur Sprachmerkmalsextraktion ein komplexes neuronales Faltungsnetz auf Grundlage räumlicher Variation umfasst;

wobei das komplexe neuronale Faltungsnetz auf Grundlage räumlicher Variationen angewendet wird, um die Mikrofonarraydaten durch die folgende Gleichung (1) auf einen hochdimensionalen Raum abzubilden:

$$Y^p[t,f] = \sum_{c=0}^{C-1} \sum_{k=-K}^{K} X_c[t, f+k] \cdot H_c^p[f, k+K] \qquad (1)$$

wobei in Gleichung (1):

p eine laufende Nummer einer Richtung darstellt;
t eine Zeit darstellt; f eine Frequenz darstellt;
c eine laufende Nummer eines Mikrofons darstellt und von 0 bis C-1 reicht;
k einen Spektralindex darstellt und von -K bis K reicht;
$J^p[t, f]$ ein Sprachmerkmal einer Sprache in der p-ten Richtung zum Zeitpunkt t und bei der Frequenz f darstellt;
$X_c[t, f + k]$ ein Spektrum (d. h., die Mikrofonarraydaten) im c-ten Mikrofon zum Zeitpunkt t und bei der Frequenz f+k darstellt und

$H_c^p[F, k+K]$ einen Filterkoeffizienten zum Abbilden der Mikrofonarraydaten am c-ten Mikrofon auf die p-te Richtung bei der Frequenz f darstellt, wobei der Filterkoeffizient einen Frequenzbereich von f-K bis f+K abdeckt.

3. Verfahren nach Anspruch 1, wobei das Extrahieren von Sprachdaten in der Zielrichtung auf Grundlage des fusionierten Sprachmerkmals Folgendes umfasst:
Eingeben des fusionierten Sprachmerkmals in ein vortrainiertes Modell zur Sprachextraktion, um die Sprachdaten in der Zielrichtung zu erhalten.

4. Verfahren nach Anspruch 1, wobei das Durchführen von Signalverarbeitung an den Mikrofonarraydaten, um ein normalisiertes Merkmal zu erhalten, Folgendes umfasst:

Durchführen von Verarbeitung an den Mikrofonarraydaten durch eine Zieltechnologie und
Durchführen von Nachbearbeitung an den aus der Verarbeitung erhaltenen Daten, um das normalisierte Merkmal zu erhalten, wobei
die Zieltechnologie mindestens eines von Folgendem umfasst: eine feste Strahlformungstechnologie und eine Sprach-Blindtrennungstechnologie.

5. Verfahren nach Anspruch 4, wobei das Durchführen von Verarbeitung an den Mikrofonarraydaten durch eine Zieltechnologie und Durchführen von Nachbearbeitung an den aus der Verarbeitung erhaltenen Daten Folgendes umfasst:
Verarbeiten der Mikrofonarraydaten durch die feste Strahlformungstechnologie und eine auf Kreuzkorrelation beruhenden Sprachverbesserungstechnologie.

**6.** Verfahren nach Anspruch 3, wobei das Verschmelzen des normalisierten Merkmals mit dem Sprachmerkmal der Sprache in der Zielrichtung und Extrahieren von Sprachdaten in der Zielrichtung auf Grundlage des verschmolzenen Sprachmerkmals Folgendes umfasst:

Verketten des normalisierten Merkmals und des Sprachmerkmals der Sprache in der Zielrichtung und Eingeben des verketteten Sprachmerkmals in das vortrainierte Modell zur Sprachextraktion, um die Sprachdaten in der Zielrichtung zu erhalten.

**7.** Einrichtung zum Extrahieren von Sprache, umfassend:

eine Erfassungseinheit, die dafür konfiguriert ist, Mikrofonarraydaten zu erfassen;
eine Verarbeitungseinheit, die dafür konfiguriert ist, Signalverarbeitung an den Mikrofonarraydaten durchzuführen, um ein normalisiertes Merkmal zu erhalten, wobei das normalisierte Merkmal zum Charakterisieren einer Wahrscheinlichkeit des Vorhandenseins von Sprache in einer vorbestimmten Richtung dient;
eine Bestimmungseinheit, die dafür konfiguriert ist, auf Grundlage der Mikrofonarraydaten ein Sprachmerkmal von Sprache in einer Zielrichtung zu bestimmen; und
eine Extraktionseinheit, die dafür konfiguriert ist, das normalisierte Merkmal mit dem Sprachmerkmal der Sprache in der Zielrichtung zu verschmelzen und auf Grundlage des verschmolzenen Sprachmerkmals Sprachdaten in der Zielrichtung zu extrahieren;
**gekennzeichnet durch**:

wobei das Bestimmen eines Sprachmerkmals von Sprache in einer Zielrichtung auf Grundlage der Mikrofonarraydaten Folgendes umfasst: Bestimmen des Sprachmerkmals der Sprache in der Zielrichtung auf Grundlage der Mikrofonarraydaten und eines vortrainierten Modells zur Sprachmerkmalsextraktion;
wobei das Bestimmen des Sprachmerkmals der Sprache in der Zielrichtung auf Grundlage der Mikrofonarraydaten und eines vortrainierten Modells zur Sprachmerkmalsextraktion Folgendes umfasst: Eingeben der Mikrofonarraydaten in das vortrainierte Modell zur Sprachmerkmalsextraktion, um das Sprachmerkmal der Sprache in einer vorbestimmten Richtung zu erhalten; und Durchführen einer Kompression oder Expansion an dem Sprachmerkmal der Sprache in der vorbestimmten Richtung durch ein vortrainiertes rekursives neuronales Netz, um das Sprachmerkmal der Sprache in der Zielrichtung zu erhalten;
wobei das Durchführen einer Kompression oder Expansion an dem Sprachmerkmal der Sprache in der vorbestimmten Richtung durch ein vortrainiertes rekursives neuronales Netz, um das Sprachmerkmal der Sprache in der Zielrichtung zu erhalten, Folgendes umfasst:
falls die Quantität der Zielrichtung geringer ist als die Quantität der vorbestimmten Richtung, Komprimieren der Sprachmerkmale der Sprache in den vorbestimmten Richtungen durch das rekursive neuronale Netz auf Sprachmerkmale in den Zielrichtungen; falls die Quantität der Zielrichtung größer ist als die Quantität der vorbestimmten Richtung, Expandieren der Sprachmerkmale der Sprache in den vorbestimmten Richtungen durch das rekursive neuronale Netz auf Sprachmerkmale in den Zielrichtungen;
wobei die Zielrichtung die vorbestimmte Richtung oder eine Richtung ist, in der sich die Schallquelle befindet, die auf der Grundlage der vorbestimmten Richtung neu bestimmt wird;
wobei das rekursive neuronale Netz ein künstliches neuronales Netz ist, das eine hierarchische Baumstruktur aufweist und Netzknoten einschließt, die eine Rekursion auf Eingabeinformationen in einer Verbindungsreihenfolge der Netzknoten durchführen.

**8.** Elektronische Vorrichtung, umfassend:

mindestens einen Prozessor;
eine Speichervorrichtung, die mindestens ein Programm speichert, wobei
das mindestens eine Programm, wenn es durch den mindestens einen Prozessor ausgeführt wird, den mindestens einen Prozessor dazu veranlasst, das Verfahren nach einem der Ansprüche 1 bis 6 zu implementieren.

**9.** Computerlesbares Medium, das ein Computerprogramm speichert, wobei
das Computerprogramm, wenn es durch einen Prozessor ausgeführt wird, den Prozessor dazu veranlasst, das Verfahren nach einem der Ansprüche 1 bis 6 zu implementieren.

**Revendications**

1. Procédé d'extraction de la parole, comprenant :

   l'obtention de données de réseau de microphones ;
   la réalisation d'un traitement de signal sur les données de réseau de microphones pour obtenir une caractéristique normalisée, dans lequel la caractéristique normalisée est destinée à caractériser une probabilité de présence d'une parole dans une direction prédéterminée ;
   la détermination, à partir des données de réseau de microphones, d'une caractéristique de parole d'une parole dans une direction cible ; et
   la fusion de la caractéristique normalisée avec la caractéristique de parole de la parole dans la direction cible, et l'extraction des données de parole dans la direction cible sur la base de la caractéristique de parole fusionnée ;
   **caractérisé par** :

   dans lequel la détermination, sur la base des données de réseau de microphones, d'une caractéristique de parole d'une parole dans une direction cible comprend : la détermination de la caractéristique de parole de la parole dans la direction cible sur la base des données de réseau de microphones et d'un modèle pré-entraîné pour une extraction de caractéristiques de parole ;
   dans lequel la détermination des caractéristiques de parole de la parole dans la direction cible à partir des données de réseau de microphones et d'un modèle pré-entraîné pour une extraction de caractéristiques de parole comprend : l'entrée des données de réseau de microphones dans le modèle pré-entraîné pour une extraction de caractéristiques de parole, pour obtenir les caractéristiques de parole de la parole dans une direction prédéterminée ; et la réalisation, au moyen d'un réseau neuronal récursif pré-entraîné, d'une compression ou d'une expansion des caractéristiques de parole de la parole dans la direction prédéterminée pour obtenir les caractéristiques de parole de la parole dans la direction cible ;
   dans lequel la réalisation, au moyen d'un réseau neuronal récursif pré-entraîné, d'une compression ou d'une expansion de la caractéristique de parole de la parole dans la direction prédéterminée pour obtenir la caractéristique de parole de la parole dans la direction cible, comprend :
   dans le cas dans lequel la quantité de la direction cible est inférieure à la quantité de la direction prédéterminée, la compression, au moyen du réseau neuronal récursif, des caractéristiques de parole de la parole dans les directions prédéterminées en caractéristiques de parole dans les directions cibles ;
   dans le cas dans lequel la quantité de la direction cible est supérieure à la quantité de la direction prédéterminée, l'expansion, au moyen du réseau neuronal récursif, des caractéristiques de parole de la parole dans les directions prédéterminées en caractéristiques de parole dans les directions cibles ;
   dans lequel la direction cible est la direction prédéterminée ou une direction dans laquelle la source sonore est situe, redéterminée sur la base de la direction prédéterminée ;
   dans lequel le réseau neuronal récursif est un réseau neuronal artificiel présentant une structure hiérarchique arborescente et incluant des nœuds de réseau qui effectuent une récursion sur des informations d'entrée dans un ordre de connexion des nœuds de réseau.

2. Procédé selon la revendication 1, dans lequel le modèle d'extraction de caractéristiques de parole comprend un réseau neuronal convolutif complexe basé sur une variation spatiale ;

   dans lequel le réseau neuronal convolutif complexe basé sur une variation spatiale est appliqué pour mapper les données de réseau de microphones dans un espace de grande dimension grâce à l'équation suivante (1) :

$$Y^p[t,f] = \sum_{c=0}^{C-1} \sum_{k=-K}^{K} X_c[t, f+k] \cdot H_c^p[f, k+K] \qquad (1)$$

   dans lequel dans l'équation (1) :

   p représente un numéro de série d'une direction ;
   t représente un temps ; f représente une fréquence ;
   c représente un numéro de série d'un microphone et varie de 0 à C - 1 ;
   k représente un indice spectral et varie de -K à K ;
   $Y^p[t, f]$ représente une caractéristique de parole de la parole dans la pième direction à l'instant t et à la fréquence f ;

$X_c[t, f + k]$ représente un spectre (à savoir, les données fr réseau de microphones) dans le cième microphone à l'instant t et à la fréquence f + k ; et

$H_c^p[f, k + K]$ représente un coefficient de filtre pour mapper les données de réseau de microphones du cième microphone vers la pième direction p à la fréquence f, le coefficient de filtre couvrant une plage de fréquences de f - K à f + K.

3. Procédé selon la revendication 1, dans lequel l'extraction de données de parole dans la direction cible à partir de la caractéristique de parole fusionnée comprend :
l'entrée des caractéristiques de parole fusionnées dans un modèle pré-entraîné pour une extraction de parole pour obtenir les données de parole dans la direction cible.

4. Procédé selon la revendication 1, dans lequel la réalisation d'une traitement de signal sur les données de réseau de microphones pour obtenir une caractéristique normalisée comprend :

la réalisation d'un traitement sur les données de réseau de microphones au moyen d'une technologie cible, et
la réalisation d'un post-traitement sur des données obtenues par le traitement, pour obtenir la caractéristique normalisée, dans lequel
la technologie cible comprend au moins l'une des technologies suivantes : une technologie de formation de faisceau fixes et une technologie de séparation aveugle de la parole.

5. Procédé selon la revendication 4, dans lequel la réalisation d'un traitement sur les données de réseau de microphones au moyen d'une technologie cible et la réalisation d'un post-traitement de données obtenues à partir du traitement, comprennent :
le traitement des données de réseau de microphones au moyen de la technologie de formation de faisceau fixe et une technologie d'amélioration de la parole basée sur une corrélation croisée.

6. Procédé selon la revendication 3, dans lequel la fusion de la caractéristique normalisée avec la caractéristique de parole de la parole dans la direction cible, et l'extraction de données de parole dans la direction cible sur la base de la caractéristique de parole fusionnée, comprennent :

la concaténation de la caractéristique normalisée et de la caractéristique de parole de la parole dans la direction cible, et
l'entrée des caractéristiques de parole concaténées dans le modèle pré-entraîné pour une extraction de parole, pour obtenir les données de parole dans la direction cible.

7. Appareil pour extraire une parole, comprenant :

une unité d'obtention, configurée pour obtenir des données de réseau de microphones ;
une unité de traitement, configurée pour effectuer un traitement de signal sur les données de réseau de microphones pour obtenir une caractéristique normalisée, dans lequel la caractéristique normalisée est destinée à caractériser une probabilité de présence d'une parole dans une direction prédéterminée ;
une unité de détermination, configurée pour déterminer, sur la base des données de réseau de microphones, une caractéristique de parole d'une parole dans une direction cible ; et
une unité d'extraction, configurée pour fusionner la caractéristique normalisée avec la caractéristique de parole de la parole dans la direction cible, et extraire des données de parole dans la direction cible sur la base de la caractéristique de parole fusionnée ;
**caractérisé par** :

dans lequel la détermination, sur la base des données de réseau de microphones, d'une caractéristique de parole d'une parole dans une direction cible comprend : la détermination de la caractéristique de parole de la parole dans la direction cible sur la base des données de réseau de microphones et d'un modèle pré-entraîné pour une extraction de caractéristiques de parole ;
dans lequel la détermination des caractéristiques de parole de la parole dans la direction cible sur la base des données de réseau de microphones et d'un modèle pré-entraîné pour une extraction de caractéristiques de parole comprend : l'entrée des données de réseau de microphones dans le modèle pré-entraîné pour une extraction de caractéristiques de parole, pour obtenir les caractéristiques de parole de la parole dans une direction prédéterminée ; et la réalisation, au moyen d'un réseau neuronal récursif pré-entraîné, d'une compression ou d'une expansion des caractéristiques de parole de la parole dans la direction prédéterminée pour obtenir les caractéristiques de parole de la parole dans la direction cible ;

dans lequel la réalisation, au moyen d'un réseau neuronal récursif pré-entraîné, d'une compression ou d'une expansion de la caractéristique de parole de la parole dans la direction prédéterminée pour obtenir la caractéristique de parole de la parole dans la direction cible, comprend :

dans le cas dans lequel la quantité de la direction cible est inférieure à la quantité de la direction prédéterminée, la compression, au moyen du réseau neuronal récursif, des caractéristiques de parole de la parole dans les directions prédéterminées en caractéristiques de parole dans les directions cibles ;

dans le cas dans lequel la quantité de la direction cible est supérieure à la quantité de la direction prédéterminée, l'expansion, au moyen du réseau neuronal récursif, des caractéristiques de parole de la parole dans les directions prédéterminées en caractéristiques de parole dans les directions cibles ;

dans lequel la direction cible est la direction prédéterminée ou une direction dans laquelle la source sonore est située, redéterminée sur la base de la direction prédéterminée ;

dans lequel le réseau neuronal récursif est un réseau neuronal artificiel présentant une structure hiérarchique arborescente et incluant des nœuds de réseau qui effectuent une récursion sur des informations d'entrée dans un ordre de connexion des nœuds de réseau.

8. Dispositif électronique, comprenant :

   au moins un processeur ;
   un dispositif de stockage stockant au moins un programme, dans lequel
   le au moins un programme, lorsqu'il est exécuté par le au moins un processeur, amène le au moins un processeur à mettre en œuvre le procédé selon l'une quelconque des revendications 1 à 6.

9. Support de stockage lisible par ordinateur, stockant un programme d'ordinateur, dans lequel
   le programme d'ordinateur, lorsqu'il est exécuté par un processeur, amène le processeur à mettre en œuvre le procédé selon l'une quelconque des revendications 1 à 6.

**Figure 1**

201

Obtain microphone array data

202

Perform signal processing on the microphone array data to obtain a normalized feature

203

Determine, based on the microphone array data, a speech feature of a speech in a target direction

204

Fuse the normalized feature with the speech feature of the speech in the target direction, and extract speech data in the target direction based on the fused speech feature

**Figure 2**

Figure 3

401

Obtain microphone array data

402

Perform signal processing on the microphone array data to obtain a normalized feature

403

Input the microphone array data into a pre-trained model for speech feature extraction, to obtain a speech feature of a speech in a predetermined direction

404

Perform through a pre-trained recurrent neural network, compression or expansion on the speech feature of the speech in the predetermined direction, to obtain the speech feature of the speech in a target direction

404

Fuse the normalized feature with the speech feature of the speech in the target direction, and input the fused speech feature into a pre-trained model for speech extraction to obtain speech data in the target direction

**Figure 4**

— 500

```
┌─────────────────────────────────────────┐
│         Speech extraction apparatus      │
│                              ┌─ 501      │
│         ┌─────────────────────────┐      │
│         │     Obtaining unit       │      │
│         └─────────────────────────┘      │
│                              ┌─ 502      │
│         ┌─────────────────────────┐      │
│         │     Processing unit      │      │
│         └─────────────────────────┘      │
│                              ┌─ 503      │
│         ┌─────────────────────────┐      │
│         │    Determination unit    │      │
│         └─────────────────────────┘      │
│                              ┌─ 504      │
│         ┌─────────────────────────┐      │
│         │     Extraction unit      │      │
│         └─────────────────────────┘      │
└─────────────────────────────────────────┘
```

## Figure 5

```
┌──────────────────┐ ┌──────────────┐ ┌──────────────┐
│ Processing device│ │     ROM      │ │     RAM      │
└──────────────────┘ └──────────────┘ └──────────────┘
      601                 602               603
         ⇕                  ↓                 ⇕
  ◁═══════════════════════════════════════════════▷  604
                           ⇕
  ┌─────────────────────────────────────────────────┐
  │                   I/O interface                  │  605
  └─────────────────────────────────────────────────┘
      ↑            ↓              ⇕              ⇕
┌──────────┐ ┌──────────┐ ┌──────────┐ ┌──────────────┐
│  Input   │ │  Output  │ │ Storage  │ │Communication │
│  device  │ │  device  │ │  device  │ │    device    │
└──────────┘ └──────────┘ └──────────┘ └──────────────┘
    606          607          608            609
```

## Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011555987

- CN 112017681 A1